# EUROPEAN PATENT APPLICATION

(11) **EP 1 992 816 A1**
(43) Date of publication of application: **19.11.2008**
(21) Application number: 07009637.5
(22) Date of filing: 14.05.2007
(51) Int. Cl.: F03D 1/00, F03D 7/00, F03D 7/02

(54) **Torque motor type wind generator**

(71) Applicant: Hiwin Mikrosystem Corp., Taichung 407 (TW)
(72) Inventor: Chuo, Yung-Tsai, Taichung 407 (TW)
(74) Representative: Heyer, Volker

(57) **Abstract**

A torque motor type wind generator comprises: a blade rotor, an engine room, a torque motor, a voltage regulator, a voltage transformer, a power storage system, and a control system. The blade rotor is connected with a connecting shaft, the engine room is a housing with a receiving space, the torque motor has a rotator shaft which is driven to rotate by electromagnetic-force, the voltage regulator includes a regulating circuit and a switch circuit, the power storage system serves to store electric energy, and the control system is employed to detect the status of power storage for facilitating the control of the electric energy input. The assembly of the abovementioned structures converts wind energy into mechanical energy or electrical energy.

## Description

### BACKGROUND OF THE INVENTION

### Field of the Invention

The present invention relates to a wind generator, and more particularly to an energy-saving, low noise, environmental friendly and simply structured torque motor type wind generator.

### Description of the Prior Art

Mankind has a long history of using wind energy, and windmill was in use as early as Before Christ and became very popular in 18-19 centuries. After the Industrial Revolution, with the great exploitation of petroleum and coal and the wide use of the electric power, the windmill was gradually neglected and declined. However, with the emergence of the energy crisis in the recent decade, wind energy attracts attention again. Today, many countries are striving to research and use the wind energy. Thanks for the advancement of the science and technology, today's wind generator has been improved considerably in performance, structure and efficiency of power generation as compared with the conventional one. Statistics show that the annual sales of the wind generator is as high as 5 billion US dollars, the total installed capacity worldwide is nearly 2 million KW, and the annul generation capacity is approximately 32 billion Kw, equals to 350,000 kilo-liter oil equivalent, therefore, it greatly relieves dependence on the traditional energy sources, and the wind generator market is expected to grow constantly and stably in the future.

After signature of the Kyoto Protocol, a series of detail targets of reducing greenhouse gas emission while increasing the renewable energy sources, including the wind energy, has been assigned at the level of region and country. To achieve these targets, Europe and other countries adopted various policies to stimulate the market, including some complicated policies, like purchasing the electricity (kw/h) at a good price and compelling the electricity supplier to increase the ratio of electricity generated from renewable energy source.

Recently, European Wind Energy Association and Greenpeace signed a report "Wind Force 12--Blueprint of by 2020 wind-generated electricity covering 12% of the global electricity needs", which anticipated and predicated that, by 2020, the total global annual capacity of installed wind generator will reach 12.31 billion Kw, and the annual installation rate will be as high as 1.5 billion Kw, covering 12% of the global electricity needs. The blueprint showed wind-generated electricity is essential factor to solve the problem of global energy. Electricity generation by wind power has become an integrated technology and an emerging industry; wind power will be the most important substitute energy source to oil and coal in the future.

Currently, all countries with wind energy potential are making their plan of wind energy exploitation. A conservative estimate of the wind energy market will be 0.3-0.4 million Kw annually. From the point of view of regions, the capacity in North American is around 0.2 million Kw, in Europe is 0.1 million Kw, and is 0.07 million Kw in other regions. Today, the market has gradually extended to the emerging countries: like Greece, Spain, Indian and etc. The wind power generation is anticipated to have great market potential, and is worthy of investment and research.

The current wind generator essentially comprises the following subassemblies:
1) a blade rotor driven by the air flow to rotate around a shaft for converting wind energy into mechanical energy;
2) a power device: the mechanical energy obtained by the rotor drives the generator and the working machines or the like to work;
3) an accelerating device used to increase the rotation speed of the gear box for driving the generator during the process of converting mechanical energy into electricity;
4) a control system with a over rotating speed control and a safe operation control of the generator;
5) a tower for supporting the wind generator and enabling the center of gyration of the generator to have a certain height; and
6) an engine room for protecting the transmission mechanism and a part of the control system.

Another large-scale wind generator is usually of the horizontal axis type and comprises a blade rotor, a gearbox (accelerating gearbox), a generator, a shift device, a control system, and a tower. The blade rotor serves to convert wind energy into mechanical energy and is assembled by assembling a plurality of blades with good airflow onto a shaft. The low rotating blade rotor is accelerated by the gearbox, and then the power is transmitted to the generator by the transmission system. These subassemblies are assembled in the engine room supported by the tower. Since the wind direction changes frequently, it must use an upwind device to effectively utilize the wind energy, and then, according to the wind direction signal detected by the wind direction sensor, the control system controls a shift motor to drive the small gear, and then the small gear drives a large gear of the tower, so that the engine room is maintained in the right direction of the wind by the automatic control system.

The present invention has arisen to mitigate and/or obviate the afore-described disadvantages.

### SUMMARY OF THE INVENTION

The primary objective of the present invention is to provide an energy-saving, low noise, environmental friendly and simply structured torque motor type wind generator.

The secondary objective of the present invention is to provide a low noise and high efficiency torque motor type wind generator.

The third objective of the present invention is to provide a torque motor type wind generator with low maintenance requirement.

To achieve the abovementioned objectives, a torque motor type wind generator in accordance with the present invention comprises: a blade rotor, an engine room, a torque motor, a voltage regulator, a voltage transformer, a power storage system, and a control system. The blade rotor is connected with a connecting shaft, the engine room is a housing with a receiving space, the torque motor has a rotator shaft which is driven to rotate by electromagnetic-force, the voltage regulator includes a regulating circuit and a switch circuit, the power storage system serves to store electric energy, and the control system is employed to detect the status of power storage for facilitating the control of the electric energy input.

### BRIEF DESCRIPTION OF THE DRAWINGS

Fig. 1 is an assembly illustrative view of a torque motor type wind generator in accordance with the present invention; and
Fig. 2 is a perspective view of a part of the torque motor in accordance with the present invention.

### DETAILED DESCRIPTION OF THE PREFERRED EMBODIMENTS

The present invention will be clearer from the following description when viewed together with the accompanying drawings, which show, for purpose of illustrations only, the preferred embodiment in accordance with the present invention.

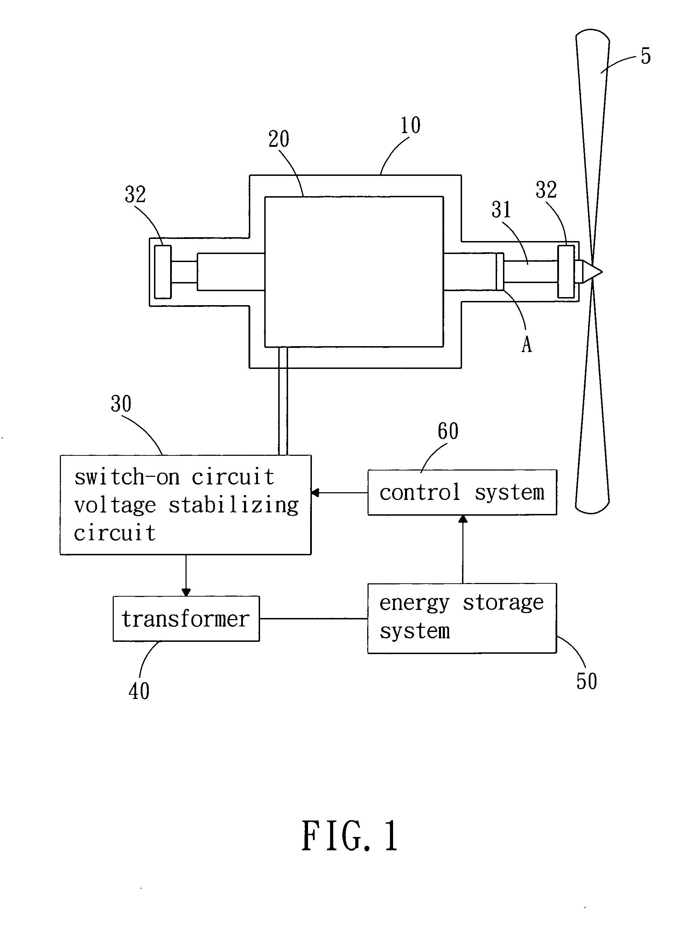

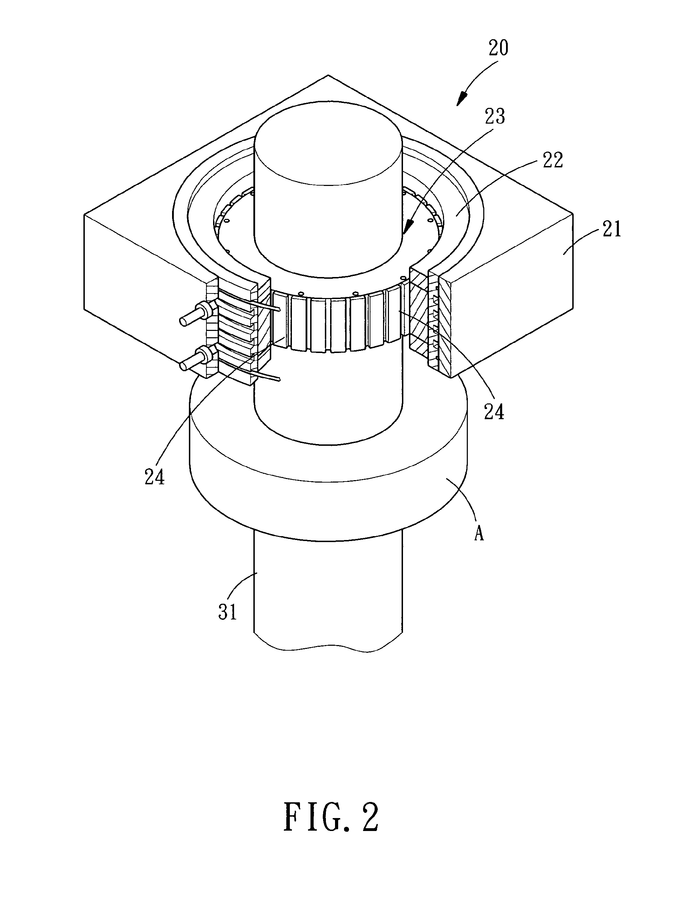

Referring to Figs. 1-2, a torque motor type wind generator in accordance with the present invention comprises a blade rotor 5, an engine room 10, a torque motor 20, a voltage regulator 30, a voltage transformer 40, a power storage system 50 and a control system 60.

The blade rotor 5 includes a connecting shaft 31 for connecting with other shafts.

The engine room 10 is a box-shaped housing with a predetermined receiving space for accommodation of mechanical components.

The torque motor 20 includes an annular stator base 21, a plurality of coils 22, a rotor shaft 23 and a plurality of magnetic poles 24. The annular stator base 21 is defined in the center thereof with a space for operation of the rotor shaft 23. The coils 22 wind around and are positioned on the inner surface of the stator base 21. The magnetic poles 24 wind around the outer periphery of the rotor shaft 23 that is rotatably disposed in the stator base 21, and the magnetic poles 24 are driven by the electromagnetic force of the coils 22 to rotate the rotor shaft 23.

A shaft coupler A is disposed at one end of the rotor shaft 23 of the torque motor 20 and is a common shaft-coupling device, further explanations are omitted.

The voltage regulator 30 includes a regulating circuit and a switch circuit.

The power storage device 50 serves to store electric energy.

The control system 60 is employed to detect the status of power storage for facilitating the control of the electric energy input.

The torque motor 20 is disposed in the engine room 10, the end of the rotor shaft 23 of the torque motor 20 provided with the shaft adaptor A is connected to the blade rotor 5 via the connecting shaft 31. At either end of the connecting shaft is disposed a roller bearing 32 for enabling the blade rotor 5 to rotate smoothly. The voltage regulator 30, the voltage transformer 40, the power storage system 50 and the control system 60 are located at their respective predetermined positions in the engine room 10 and are connected by wires 33.

The working principle of the generator of the present invention:
Airflow (namely the wind) pushes the blades to move, so that the wind energy is changed into useful mechanism energy or electric power. The rotation of the blade rotor 5 by the wind is based on the action of the airflow power (including the ascending force and the resistance) which produces a rotating torque to the blades. Since the blade rotor 5 is directly connected to the torque motor 20, it enables the torque motor 20 to produce a phase voltage, and the voltage regulating circuit of the voltage regulator 30 stabilizes the unstable voltage. And then the voltage transformer 40 stores the electric power into the power storage system 50. In addition, the control system controls the status of the power storage of the power storage system 50 and transmits the information to the switch circuit of the voltage regulator 30, so as to determine whether to continue the power storing process or not.

The patentable functions and effects of the present invention are to be explained below while referring to the respective figures:
Regarding the aspect of energy saving:
   1. the torque motor 20 is directly connected to the blade rotor 5 and is driven by airflow to rotate around the shaft, it transforms wind energy into mechanical energy or electric energy, so that the magnetic poles 24 around the rotor shaft 23 can rotate without charging. Therefore, the present invention effectively saves energy source and it does not need the conventional assistant components, like the speed differential mechanism, gearbox, therefore, the conventional friction loss and the drive energy can be saved.
Regarding the structure simplification and space reduction:
   1. the torque motor 20 is directly connected to the blade rotor 5 and is driven by airflow to rotate around the shaft, it transforms wind energy into mechanical energy or electric energy, so that the magnetic poles around the rotor shaft can rotate without charging. Therefore, the present invention does not need the conventional assistant components, like the speed differential mechanism, gearbox, therefore, it simplifies the structure, reduces the space and cost.
Low noise and high efficiency:
   1. the present invention uses the torque motor 20 as a power source, the torque motor 20 itself is driven to rotate by the electromagnetic force produced by the magnetic poles 24 around the rotor shaft 23 and the coils 22. Therefore, the torque motor 20 of the present invention is low noise. In addition, the great number of the magnetic poles 24 around the rotor shaft 23 substantially increases the torsion force, therefore, the efficiency of the torque motor 20 of the present invention is high.
Low protection and maintenance requirements:
   1. the present invention uses the torque motor 20 as a power source, the torque motor 20 itself is driven to rotate by the electromagnetic force produced by the magnetic poles 24 around the rotor shaft 23 and the coils 22, and such a magnetic drive force almost requires no lubrication maintenance.
Environmental friendly:
   1. the torque motor 20 is driven by magnetic force, so it is environmental friendly and free of the problem of air pollution.

While we have shown and described various embodiments in accordance with the present invention, it is clear to those skilled in the art that further embodiments may be made without departing from the scope of the present invention.

## Claims

1. A torque motor type wind generator comprising: a blade rotor, an engine room, a torque motor, a voltage regulator, a voltage transformer, a power storage system, and a control system; wherein:
the blade rotor is connected with a connecting shaft:
the engine room is a housing with a receiving space;
the torque motor has a rotator shaft which is driven to rotate by electromagnetic-force;
the voltage regulator includes a regulating circuit and a switch circuit;
the power storage system serves to store electric energy; and
the control system is employed to detect the status of power storage for facilitating the control of the electric energy input.

2. The torque motor type wind generator as claimed in claim 1, wherein the torque motor includes an annular stator base, a plurality of coils, the rotor shaft and a plurality of magnetic poles, the annular stator base is defined in the center thereof with a space for operation of the rotor shaft, the coils wind around and are positioned on an inner surface of the stator base, the magnetic poles wind around an outer periphery of the rotor shaft that is rotatably disposed in the stator base, and the magnetic poles are driven by electromagnetic force of the coils to rotate the rotor shaft.
